Europäisches Patentamt

European Patent Office

Office européen des brevets

(19)

(11) Veröffentlichungsnummer : **0 099 128 B1**

(12) **EUROPÄISCHE PATENTSCHRIFT**

(45) Veröffentlichungstag der Patentschrift :
27.05.87

(21) Anmeldenummer : **83106925.7**

(22) Anmeldetag : **14.07.83**

(51) Int. Cl.⁴ : **H 04 Q 3/00, H 04 Q 1/50**

(54) **Schaltungsanordnung zur Abgabe von Gleichstrom-Schaltkennzeichen in einem Kennzeichenumsetzer.**

(30) Priorität : **16.07.82 DE 3226686**

(43) Veröffentlichungstag der Anmeldung :
**25.01.84 Patentblatt 84/04**

(45) Bekanntmachung des Hinweises auf die Patenterteilung : **27.05.87 Patentblatt 87/22**

(84) Benannte Vertragsstaaten :
**AT CH DE FR IT LI**

(56) Entgegenhaltungen :
**DE-B- 2 748 522**
**GB-A- 2 050 116**

(73) Patentinhaber : **Siemens Aktiengesellschaft Berlin und München**
**Wittelsbacherplatz 2**
**D-8000 München 2 (DE)**

(72) Erfinder : **Sontheim, Johann, Ing. grad**
**Alpspitzstrasse 14**
**D-8133 Feldafing (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

## Beschreibung

Die Erfindung betrifft eine Schaltungsanordnung in einem Kennzeichenumsetzer zur Abgabe von Gleichstrom-Schaltzeichen durch Einschalten eines Widerstandes zwischen zwei Fernsprechadern der durch die Reihenschaltung der Primärwicklung eines Transformators und eines periodisch schließenden elektronischen Schalters gebildet wird, mit einer Gleichrichterdiode, die die Sekundärwicklung des Transformators mit der Spannungsversorgung des Kennzeichenumsetzers zur Energierückspeisung verbindet, und mit einer ebenfalls an die Sekundärwicklung angeschlossenen Überwachungseinrichtung für Schleifenstrom.

In dem Siemens-Sonderdruck « Zeitmultiplex-System PCM30F » mit Schleifensignalisierung, Bestell-Nr. S42022-A732-A1-1-29 ist auf Seite 3 ein PCM-Netz mit Kennzeichenumsetzung dargestellt. Die Erfindung betrifft beispielsweise den Kennzeichenumsetzer SCI-L, der die PCM-codierten Schaltkennzeichen wieder in Gleichstromsignale umsetzt. Zwischen diesem Kennzeichenumsetzer und der Ortsvermittlung LW können selbstverständlich noch mehrere Vermittlungen eingeschaltet sein. Die bisher bekannten Kennzeichenumsetzer « kommend » erzeugen die Gleichstrom-Schaltkennzeichen durch Einschalten eines ohmschen Widerstandes zwischen die Adern a, b einer Fernsprechleitung. Die Stromversorgung erfolgt hierbei im allgemeinen von der nächsten Vermittlung. Da der Schleifenwiderstand mit ca. 200 Ohm vorgegeben ist, wird in den Kennzeichenumsetzern eine beträchtliche Wärme erzeugt, die wiederum einer kompakten Bauweise entgegensteht.

Aus der DE-B-27 48 522 ist eine Schaltungsanordnung zur Schleifensignalisierung bekannt, die den ohmschen Widerstand durch die Reihenschaltung eines periodisch betätigten elektronischen Schalters und einer Induktivität ersetzt. Die bei dieser Anordnung aus den Schaltkennzeichen wiedergewonnene Energie wird in die Stromversorgung rückgespeist. Der elektronische Schalter wird über einen Optokoppler oder einen Transformator potentialfrei angesteuert. Diese Schaltungsanordnung weist von dem geringen ohmschen Widerstand der Induktivität abgesehen keine Strombegrenzung auf.

Aufgabe der Erfindung ist es, für einen Kennzeichenumsetzer eine verlustarme Schaltungsanordnung zur Abgabe von Gleichstrom-Schaltkennzeichen mit einem bei deren üblichen Stromwerten konstanten Widerstand und mit einer Strombegrenzung anzugeben.

Ausgehend von einer Schaltungsanordnung der eingangs beschriebenen Art, wird diese Aufgabe dadurch gelöst, daß zur Steuerung der Schließzeit des elektronischen Schalters ein Differenzierglied vorgesehen ist, dem zur Aussteuerung des elektronischen Schalters ein Takt mit konstanter Frequenz zugeführt wird, dessen Impulse durch das Differenzierglied Dachschrägen erhalten, daß der Ausgang des Differenziergliedes mit einem ersten Eingang eines den elektronischen Schalter steuernden Operationsverstärkers verbunden ist, an dessen zweitem Eingang eine Vergleichsspannung anliegt, und daß von der Überwachungseinrichtung eine vom Schleifenstrom abhängige Regelspannung einem Eingang des Operationsverstärkers zur Festlegung seiner Schaltschwelle zugeführt ist.

Durch diese Art der Regelung wird der Schleifenstrom begrenzt. Dies ist erforderlich, wenn der Widerstand der Fernsprechleitung sehr gering ist. Im Normalfall stellt diese Schaltungsanordnung dagegen einen konstanten Widerstand dar.

Weitere vorteilhafte Ausbildungen der Erfindung sind in den abhängigen Ansprüchen angegeben.

Ein Ausführungsbeispiel der Erfindung wird anhand der Figuren 1 bis 7 erläutert.

Es zeigen

Figur 1 eine Schaltungsanordnung zur Abgabe von Gleichstrom-Schaltkennzeichen,

Figur 2 ein Prinzipschaltbild zur Erzeugung eines äquivalenten Gleichstromwiderstandes durch die Serienschaltung einer Induktivität und eines Schalters,

Figur 3 die Verwendung eines Transformators als Induktivität,

Figur 4 bis Fig. 6 Zeitdiagramme zur Erläuterung der Funktion der Schaltungsanordnung und

Figur 7 ein Schaltungsbeispiel.

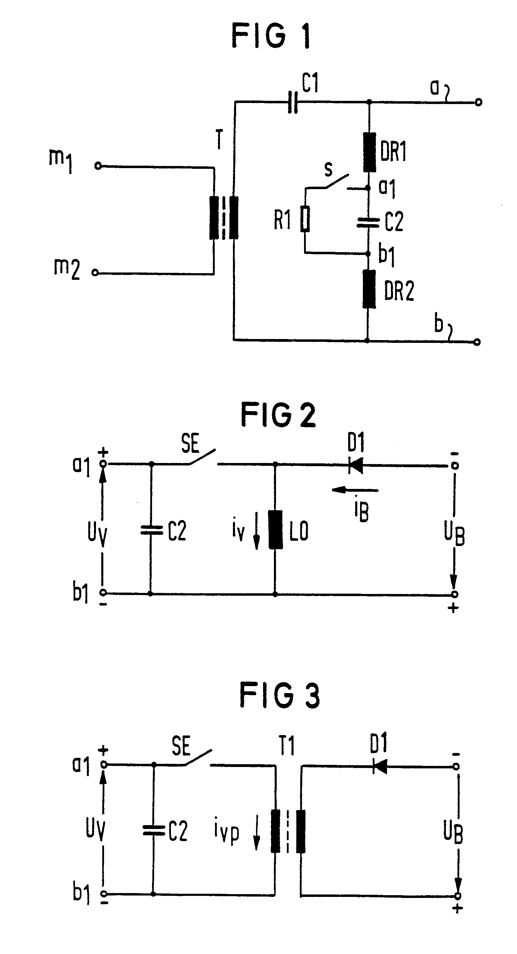

In Fig. 1 ist die Anschlußstelle einer üblichen Ortsfernsprechleitung an eine PCM-Multiplexeinrichtung dargestellt. Die Multiplexeinrichtung ist an den Anschlußklemmen $m_1$ und $m_2$ eines Transformators T angeschaltet. Die Gespräche werden über diesen Transformator übertragen. Zwischen der Sekundärwicklung des Transformators T und den Adern a, b der Fernsprechleitung ist ein Kondensator C1 zur gleichstrommäßigen Entkopplung eingeschaltet. Zwischen den Fernsprechadern a, b liegt die Reihenschaltung einer ersten Drossel DR1, eines zweiten Kondensators C2 und einer zweiten Drossel DR2 ; parallel zum zweiten Kondensator C2 liegt die Reihenschaltung eines Schalters S und eines Widerstandes R1. Die Anschlüsse des Kondensators sind mit $a_1$ und $b_1$ bezeichnet. Die Drosseln DR1 und DR2 können auch durch eine einzige Drossel mit zwei Wicklungen ersetzt werden.

Die von der Multiplexeinrichtung empfangenen Kennzeichen werden als Gleichstrom-Kennzeichen auf den Fernsprechadern a, b weitergegeben. Dies erfolgt durch Schließen und Öffnen des Schalters S. Die Spannungsversorgung erfolgt hierbei über die Fernsprechadern a, b. Durch Auswerten des Schleifenstromes können von der an die Adern a, b angeschlossenen Vermittlung die Kennzeichen erkannt werden.

In Fig. 2 ist der ohmsche Widerstand R1 durch eine Induktivität L0 und einen elektronischen Schalter SE ersetzt. Parallel zu dieser Anordnung liegt wiederum der Kondensator C2. An den Anschlußklemmen $a_1$ und $b_2$ stellt sich eine vom Schleifenstrom und vom Gleichstromwiderstand abhängige Spannung $U_V$ ein; am Anschlußpunkt $a_1$ liegt das positive Potential. Über eine Gleichrichterdiode D1 ist die Induktivität L0 ebenfalls an die Spannungsversorgung $U_3$ des Kennzeichenumsetzers angeschaltet. Die Gleichrichterdiode D1 ist so geschaltet, daß sie bei geschlossenem elektronischen Schalter SE gesperrt ist, d. h. ihre Anode ist an dem Minuspol der Spannungsversorgung $U_B$ des Kennzeichenumsetzers angeschlossen.

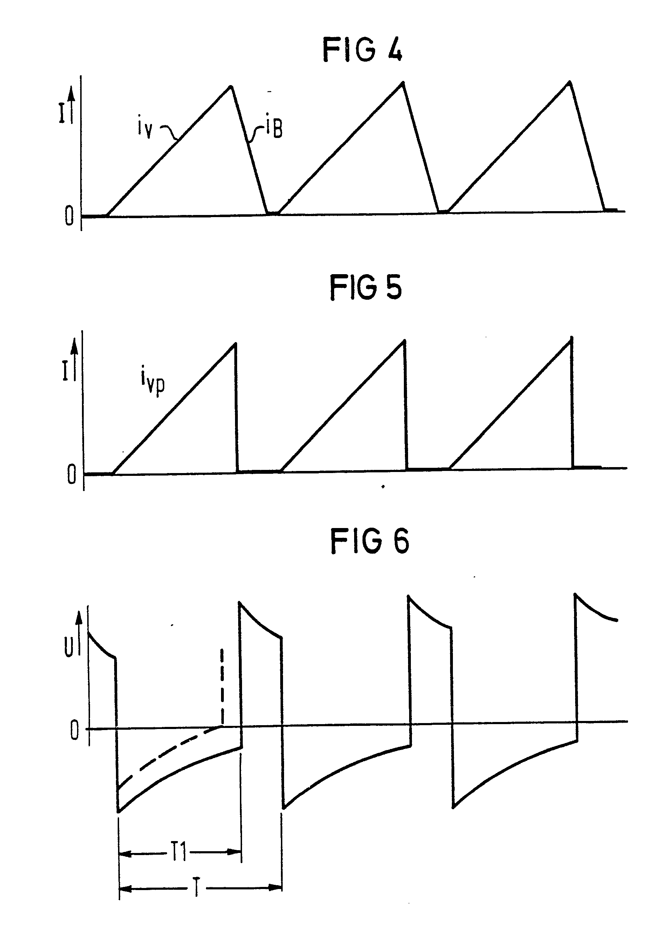

In Fig. 4 ist der prinzipielle Verlauf des Stromes durch die Induktivität L0 dargestellt. Unter Vernachlässigung ohmscher Widerstände steigt der Strom $i_V$ durch die Induktivität L0 beim Schließen des elektronischen Schalters SE linear an. Beim Öffnen des elektronischen Schalters fließt der Strom $i_B$ in derselben Richtung durch die Induktivität L0 weiter und lädt jetzt die Spannungsversorgung $U_B$ des Kennzeichenumsetzers auf.

In Fig. 3 ist eine weitgehen Fig. 2 entsprechende Schaltungsanordnung dargestellt. Die Induktivität L0 wurde durch einen Transformator T1 ersetzt. Unter der Annahme, daß das Übersetzungsverhältnis des Transformators T1 1 : 1 ist, wird eine Potentialtrennung der verwendeten Spannungsversorgungen erreicht, ohne daß sich die elektrischen Verhältnisse wesentlich ändern. Durch die Primärwicklung des Transformators T1 fließt jetzt natürlich nur der in Fig. 5 dargestellte Strom $i_{VP}$. Aus dem Mittelwert des dargestellten Stromes $i_{VP}$ und der anliegenden Spannung kann ein mittlerer Gleichstrom Innenwiderstand der in Fig. 2 oder in Fig. 3 dargestellten Schaltungsanordnung errechnet werden. Da der Mittelwert des Stromes von der Schließdauer des elektronischen Schalters SE abhängig ist, kann durch eine Änderung der Schließdauer bei einer vorgegebenen Schaltfrequenz der Gleichstrom-Innenwiderstand variiert werden.

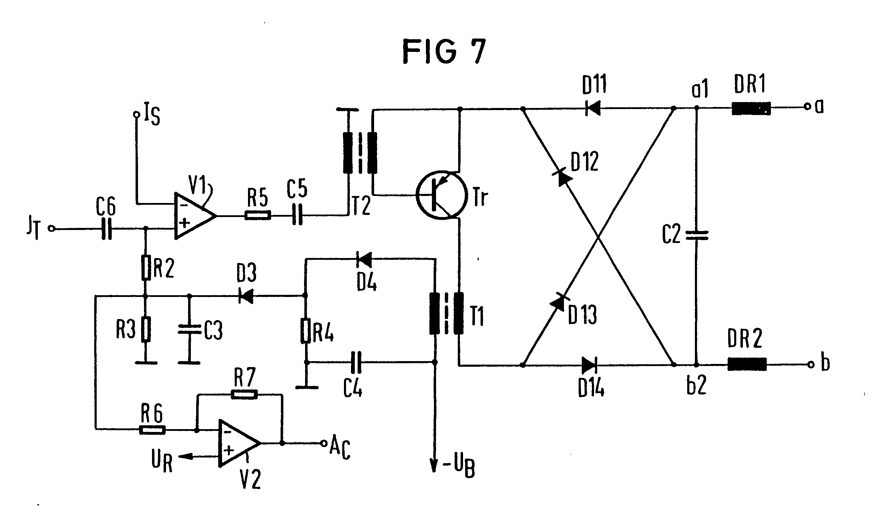

In Fig. 7 ist ein Ausführungsbeispiel der erfindungsgemäßen Schaltungsanordnung dargestellt. An die Primärwicklung des Transformators T1 ist ein Transistor Tr, der als elektronischer Schalter dient, mit seinem Kollektor angeschaltet. Der Emitter dieses Transistors und der zweite Anschluß der Primärwicklung des Transformators T1 ist über eine aus vier Dioden D11 bis D14 bestehende Graetz-Schaltung und über jeweils eine Drossel DR1 bzw. DR2 an die Anschlußpunkte $a_1$ bzw. $b_1$ angeschaltet. Die Drosseln DR1 und DR2 können wieder durch eine Drossel mit zwei Windungen ersetzt werden. Der Kondensator C2 liegt parallel zur Graetz-Schaltung. Die Basis des Transistors Tr wird über einen zweiten Transformator T2 angesteuert. Dessen Sekundärwicklung liegt hierbei zwischen Basis und Emitter des Transistors Tr. Die Primärwicklung wird über eine Kombination eines Widerstandes R5 und eines Kondensators C5 von einem ersten Operationsverstärker V1 angesteuert. An den invertierenden Eingang dieses Operationsverstärkers ist

ein Schleifensteuereingang $I_S$ angeschaltet. Der nichtinvertierende Eingang des ersten Operationsverstärkers V1 ist über einen Kondensator C6 mit einem Takteingang $I_T$ verbunden. Der Kondensator C6 bildet zusammen mit einem zweiten ohmschen Widerstand R2, der ebenfalls an den nichtinvertierenden Eingang des ersten Operationsverstärkers V1 angeschlossen ist, ein Differenzierglied. Der zweite Anschluß des zweiten ohmschen Widerstandes R2 liegt über eine Parallelschaltung eines dritten ohmschen Widerstandes R3 und eines Kondensators C3 an Masse. Der Verbindungspunkt der beiden ohmschen Widerstände R2 und R3 ist über zwei Dioden D3 und D4 mit einem Anschluß der Sekundärwicklung des ersten Transformators T1 verbunden. Der zweite Anschluß der Sekundärwicklung ist an den Minuspol der Spannungsversorgung $U_B$ angeschlossen. Ein vierter Kondensator C4 dient zur Siebung. In die Leitung zum Minuspol der Spannungsversorgung $U_B$ kann eine weitere Drossel eingeschaltet werden. Der Verbindungspunkt der beiden Dioden D3 und D4 ist über einen Widerstand R4 ebenfalls an Masse geschaltet. Der Verbindungspunkt der Widerstände R2 und R3 ist auf einen durch die ohmschen Widerstände R6 und R7 als Schwellwertschalter arbeitenden zweiten Operationsverstärker V2 geführt, dessen nichtinvertierendem Eingang eine Referenzspannung $U_R$ zugeführt wird. Der Ausgang des zweiten Operationsverstärkers V2 ist mit $A_C$ bezeichnet.

Durch die Graetz-Schaltung wird die erfindungsgemäße Schaltungsanordnung von der Polung der an den Fernsprechadern a, b anliegenden Spannung unabhängig. Der Kondensator C2 verhindert Störungen des Sprachfrequenzbandes. Über den Takteingang $I_T$ wird ein Takt von 64 kHz mit einem Tastverhältnis von 3 : 1 dem ersten Operationsverstärker V1 zugeführt. Liegen am Schleifensteuereingang $I_S$ ca. 0 Volt an, so gelangt der Takt über den zweiten Transformator T2 an die Basis des Transistors Tr und schaltet diesen periodisch durch. Die Rückspeisung der gespeicherten Energie während des Sperrens des Transistors Tr erfolgt über die Sekundärwicklung des Transformators T1 und über die Diode D4 sowie den vierten ohmschen Widerstand R4.

An dem Kondensator C3 wird eine Regelspannung gewonnen, die über den zweiten ohmschen Widerstand R2 an den nicht invertierenden Eingang des ersten Operationsverstärkers V1 gelangt. An diesem Eingang des Operationsverstärkers liegt die in Fig. 6 dargestellte Spannung mit der Periode T. Fließen größere Ströme über den Transistor Tr, so steigt die Regelspannung an, bis die in Fig. 6 dargestellte Eingangsspannung am nichtinvertierenden Eingang soweit angehoben ist, daß das Ausschalten bereits während der Entladungskurve des Kondensators C6 erfolgt (gestrichelte Kurve). Dadurch wird die Einschaltdauer T1 des Transistors Tr verkürzt und der Gleichstromwiderstand der Schaltungsanordnung erhöht.

Die Überwachung, ob ein Schleifenstrom fließt, erfolgt ebenfalls über die Regelspannung. Fließt kein Schleifenstrom, so ist die Regelspannung 0, fließt dagegen ein genügend großer Strom, wird die Regelspannung positiv und der zweite Operationsverstärker V2 der gibt an seinem Ausgang $A_C$ ein entsprechendes Signal ab.

Die Steuerung der Schaltungsanordnung erfolgt über dem Schleifensteuereingang $I_S$. Ist das Potential an diesem Eingang negativ, so bleibt der Transistor Tr gesperrt. Dies bedeutet, daß kein Schleifenstrom fließt. Liegt dagegen der Schleifensteuereingang $I_S$ auf 0 Volt, so wird der Transistor Tr periodisch durchgeschaltet und es kann Schleifenstrom fließen. Der Schleifensteuereingang $I_S$ ist an den Steuerteil des Kennzeichenumsetzers angeschlossen.

**Patentansprüche**

1. Schaltungsanordnung in einem Kennzeichenumsetzer zur Abgabe von Gleichstrom-Schaltzeichen durch Einschalten eines Widerstandes zwischen zwei Fernsprechadern (a, b), der durch die Reihenschaltung der Primärwicklung eines Transformators (T1) und eines periodisch schließenden elektronischen Schalters (SE) gebildet wird, mit einer Gleichrichterdiode (D4), die die Sekundärwicklung des Transformators (T1) mit der Spannungsversorgung ($U_B$) des Kennzeichenumsetzers zur Energierückspeisung verbindet, und mit einer ebenfalls an die Sekundärwicklung angeschlossenen Überwachungseinrichtung für Schleifenstrom, dadurch gekennzeichnet, daß zur Steuerung der Schließzeit des elektronischen Schalters (SE) ein Differenzierglied (C6, R2) vorgesehen ist, dem zur Aussteuerung des elektronischen Schalters (SE) ein Takt mit konstanter Frequenz zugeführt wird, dessen Impulse durch das Differenzierglied Dachschrägen erhälten, daß der Ausgang des Differenziergliedes (C6, R2) mit einem ersten Eingang eines den elektronischen Schalter (SE) steuernden Operationsverstärkers (V1) verbunden ist, an dessen zweitem Eingang eine Vergleichsspannung (0 volt) anliegt, und daß von der Überwachungseinrichtung eine vom Schleifenstrom abhängige Regelspannung einem Eingang des Operationsverstärkers (V1) zur Festlegung seiner Schaltschwelle zugeführt ist.

2. Schaltungsanordnung nach Anspruch 1, dadurch gekennzeichnet, daß die Regelspannung zur Steuerung der Schließzeit des elektronischen Schalters (SE) über eine Diode (D3) an einem RC-Glied (R3, C3) aus der an der Sekundärwicklung des Transformators (T1) abgegebenen Spannung gewonnen wird.

3. Schaltungsanordnung nach Anspruch 1 oder Anspruch 2, dadurch gekennzeichnet, daß als elektronischer Schalter (SE) ein Transistor (Tr) vorgesehen ist, der vom Operationsverstärker (V1) über einen zweiten Transformator (T2) potentialfrei angesteuert wird.

4. Schaltungsanordnung nach Anspruch 2, dadurch gekennzeichnet, daß ein als Schwellenwertschalter arbeitender zweiter Operationsverstärker (V2) vorgesehen ist, dem zur Überwachung des Schweifenzustandes ebenfalls die Regelspannung zugeführt ist.

5. Schaltungsanordnung nach einem der vorhergehenden Ansprüche, dadurch gekennzeichnet, daß der Takt zum Ansteuern des elektronischen Schalters (SE) ein Tastverhältnis von 3 : 1 entsprechend der Schließzeit zur Öffnungszeit bei einem üblichen Schleifenstrom aufweist.

6. Schaltungsanordnung nach einem der vorhergehenden Ansprüche 1 bis 5, dadurch gekennzeichnet, daß die Frequenz des Taktes ein ganzzahliges Vielfaches von 8 KHz ist.

**Claims**

1. A circuit arrangement in a characteristic converter which emits d. c. switching characteristics when a resistor is connected between two telephone wires (a, b) and which is formed by a series combination of the primary winding of a transformer (T1) and an electronic switch (SE) which closes periodically, with a rectifier diode (D4) which connects the secondary winding of the transformer (T1) to the voltage supply ($U_B$) of the characteristic converter for the feedback of energy, and with a loop current monitoring device likewise connected to the secondary winding, characterised in that for the control of the closure time of the electronic switch (SE) a differentiator element (C6, R2) is provided which, for the drive of the electronic switch (SE), is supplied with a constant frequency clock signal whose pulses are provided with a tilt by the differentiator element, that the output of the differentiator element (C6, R2) is connected to the first input of an operational amplifier (V1) which controls the electronic switch (SE) and to the second input of which a comparison voltage (0 Volt) is connected, and that from the monitoring device a regulating voltage dependent upon the loop current is fed to an input of the operational amplifier (V1) in order to determine the switching threshold thereof.

2. A circuit arrangement as claimed in Claim 1, characterised in that the regulating voltage which controls the closure time of the electronic switch (SE) is obtained, via a diode (D3), by an RC-component (R3, C3) from the voltage emitted at the secondary winding of the transformer (T1).

3. A circuit arrangement as claimed in Claim 1 or 2, characterised in that the electronic switch (SE) consists of a transistor (Tr) driven by the operational amplifier (V1) in potential-isolated fashion via a second transformer (T2).

4. A circuit arrangement as claimed in Claim 2, characterised in that a second operational amplifier (V2) is provided which operates as a threshold value switch and which is likewise supplied with the regulating voltage in order to monitor the loop state.

5. A circuit arrangement as claimed in one of the preceding Claims, characterised in that the clock signal which drives the electronic switch (SE) has a pulse duty ratio of 3 : 1 corresponding to the ratio of closure time to opening time with a conventional loop current.

6. A circuit arrangement as claimed in one of the preceding Claims 1 to 5, characterised in that the frequency of the clock signal is a whole numbered multiple of 8 KHz.

## Revendications

1. Montage situé dans un convertisseur de signaux caractéristiques, pour la délivrance de signaux de commutation à courant continu grâce au branchement, entre deux fils téléphoniques (a, b), d'une résistance qui est formée par le montage série de l'enroulement primaire d'un transformateur (T1) et d'un interrupteur électronique (ST) se fermant périodiquement, et comportant une diode de redressement (D4), qui relie l'enroulement secondaire du transformateur (R) à l'alimentation en tension (U$_B$) du convertisseur de signaux caractéristiques pour réaliser une rétroalimentation en énergie, et comportant un dispositif de contrôle du courant de boucle, raccordé également à l'enroulement secondaire, caractérisé par le fait que pour la commande de la durée de fermeture de l'interrupteur électronique (SE), il est prévu un circuit différentiateur (C6, R2), auquel est envoyée, pour réaliser la modulation de l'interrupteur électronique (SE), une cadence présentant une fréquence constante et dont les impulsions sont amenées à avoir des formes en rampe sous l'action du circuit différentiateur, que la sortie du circuit différentiateur (C6, R2) est reliée à une première entrée d'un amplificateur opérationnel (V) commandant l'interrupteur électronique (SE) et à la seconde entrée duquel est appliquée une tension de comparaison (0 volt) et qu'une tension de réglage dépendant du courant de boucle est envoyée par le dispositif de contrôle à une entrée de l'amplificateur opérationnel (V1) pour fixer le seuil de commutation de ce dernier.

2. Montage suivant la revendication 1, caractérisé par le fait que la tension de réglage servant à commander la durée de fermeture de l'interrupteur électronique (SE) est obtenue, par l'intermédiaire d'une diode (D3), dans un circuit RC (R3, C3), à partir de la tension délivrée à l'enroulement secondaire du transformateur (T1).

3. Montage suivant la revendication 1 ou 2, caractérisé par le fait qu'il est prévu comme interrupteur électronique (SE) un transistor (Tr), qui est commandé à un potentiel libre par l'amplificateur opérationnel (V1) par l'intermédiaire d'un second transformateur (T2).

4. Montage suivant la revendication 2, caractérisé par le fait qu'il est prévu un second amplificateur opérationnel (V2) fonctionnant en tant que commutateur à valeur de seuil et auquel la tension de réglage est également envoyée pour le contrôle de l'état de la boucle.

5. Montage suivant l'une des revendications précédentes, caractérisé par le fait que la cadence servant à commander l'interrupteur électronique (SE) possède un taux d'impulsions égal à 3 : 1 qui correspond au rapport de la durée de fermeture à la durée d'ouverture dans le cas d'un courant usuel de boucle.

6. Montage suivant l'une des revendications 1 à 5, caractérisé par le fait que la fréquence de la cadence est un multiple entier de 8 kHz.

# FIG 1

# FIG 2

# FIG 3

0 099 128

FIG 4

FIG 5

FIG 6

2

# FIG 7

0 099 128